# EUROPEAN PATENT SPECIFICATION

(11) **EP 2 308 741 B1**
(45) Date of publication and mention of the grant of the patent: **05.11.2014**
(21) Application number: 09802406.0
(22) Date of filing: 27.07.2009
(51) Int. Cl.: B62B 7/08

(54) **FOLDABLE BABY STROLLER**
ZUSAMMENKLAPPBARER KINDERWAGEN
POUSSETTE PLIANTE

(30) Priority: 29.07.2008 CN 200810021416
(43) Date of publication of application: 13.04.2011
(73) Proprietor: Goodbaby Child Products Co., Ltd., Jiangsu 215-331 (CN)
(72) Inventor: GAO, Xiang, Kunshan Jiangsu 215331 (CN)
(74) Representative: Stuttard, Garry Philip
(86) International application number: PCT/CN2009/072922
(87) International publication number: WO 2010/012213

(56) References cited:
- EP-A1- 1 466 810
- EP-A1- 1 762 460
- CN-A- 1 970 365
- CN-A- 101 337 555
- CN-Y- 200 951 786
- CN-Y- 200 954 826
- CN-Y- 201 272 389
- JP-A- 9 002 282
- US-A- 5 558 357

## Description

### Field of the Invention

The present invention relates to a stroller, particularly, to a foldable stroller.

### Description of the Related Art

The foldable strollers of the prior art generally comprise a foldable stroller frame, wheel assemblies for providing support arranged on the bottom of the stroller frame, and a locking mechanism for locking the stroller frame when unfolded, wherein, the stroller frame is locked up by the locking mechanism adopting different mechanical structures, for example, by means of the rigid support of rods, or pothooks attached to rods, or the like ways. However, the connection modes described herein-above may lead to mis-operations by carelessly touching of users or going through undesired circumstances like bumpiness, resulting in great incontinence for users, also risks for the baby in the stroller. Document EP 1 466 810 A1 shows a foldable stroller, comprising a front and a rear fork, a U-shaped swing rod, a push rod and locking parts.

### Summary Of The Invention

The object of the present invention is to provide a baby stroller that is safe for folding.

In order to obtain one or more of these objects, the invention as defined in claim 1 provides a foldable stroller, comprising a front fork and front wheels connected to the front fork end, a rear fork and rear wheels connected to the rear fork end, a telescopic link disposed between the front fork and the rear fork, a U-shaped swing rod with the blind end rotatably connected to the front fork, a second rotation connector with one end fixed to the blind end of the U-shaped swing rod and the other rotatably connected to the rear fork, and a push rod rotatably connected to the open end of the U-shaped swing rod, whereby, the profile projection of the front fork, the rear fork, the second rotation connector and the telescopic link constitute a quadrangular support structure, wherein, the foldable stroller further comprises a first locking part for locking or unlocking the telescopic link, and a second locking part for locking or unlocking the first locking part, whereby, the first locking part is lockable or unlockable only the second locking part in an unlocked position, to start or stop the folding of the quadrangular support structure.

In certain embodiments, the push rod comprises a lower push rod connected to the U-shaped swing rod and provided with at least a hollow cavity which an upper push rod is plugged into.

In certain embodiments, a number of displacement limitators for limiting the relative position between the lower push rod and the upper push rod are arranged at the junction thereof.

In certain embodiments, the second locking part is disposed on the U-shaped swing rod, whereby, the second locking part is triggered off to actuate unlocking the first locking part when the lower push rod rotates in the direction of the front fork.

In still certain embodiment, the telescopic link comprises an air spring.

The present invention has the following advantages:
Owning to the addition of the second locking part for locking or unlocking the folding step, the folding step remains stable in mis-operation circumstances for example an unintentional touch, making the baby stroller folding with more safety;
During the folding process, pushing the lower push rod forward to a predefined position to actuate the second locking part unlocking the folding pedal is sufficient to indicate user's intention to fold the stroller, guaranteeing the safety of the stroller folding process.

### BRIEF DESCRIPTION OF THE DRAWINGS

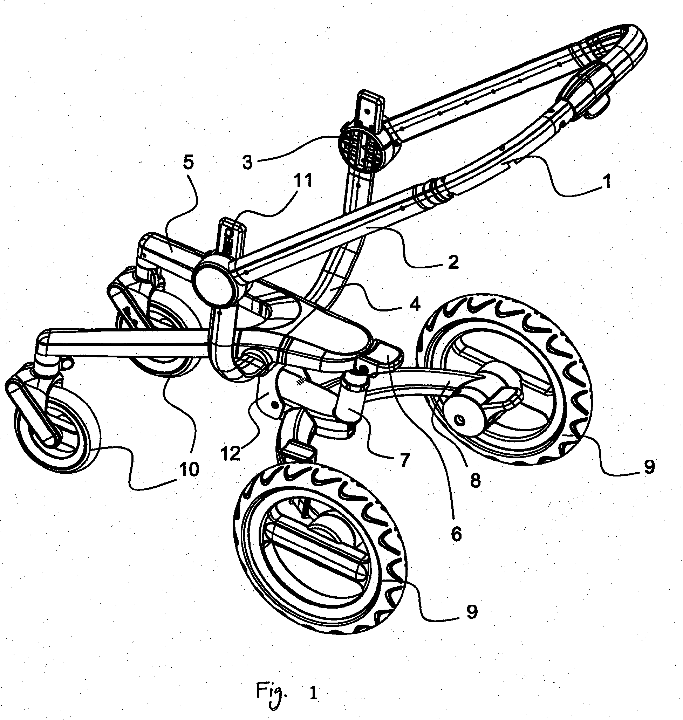

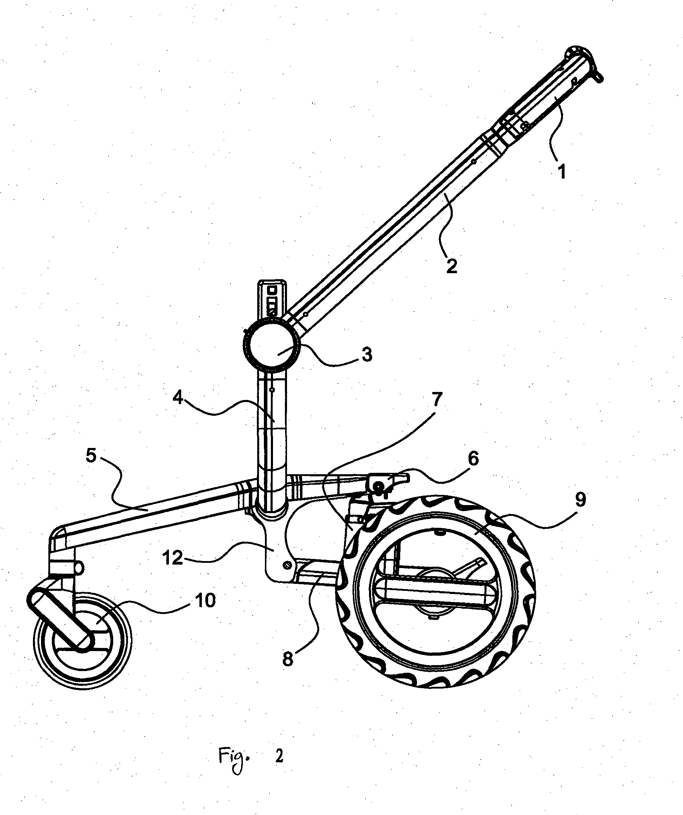

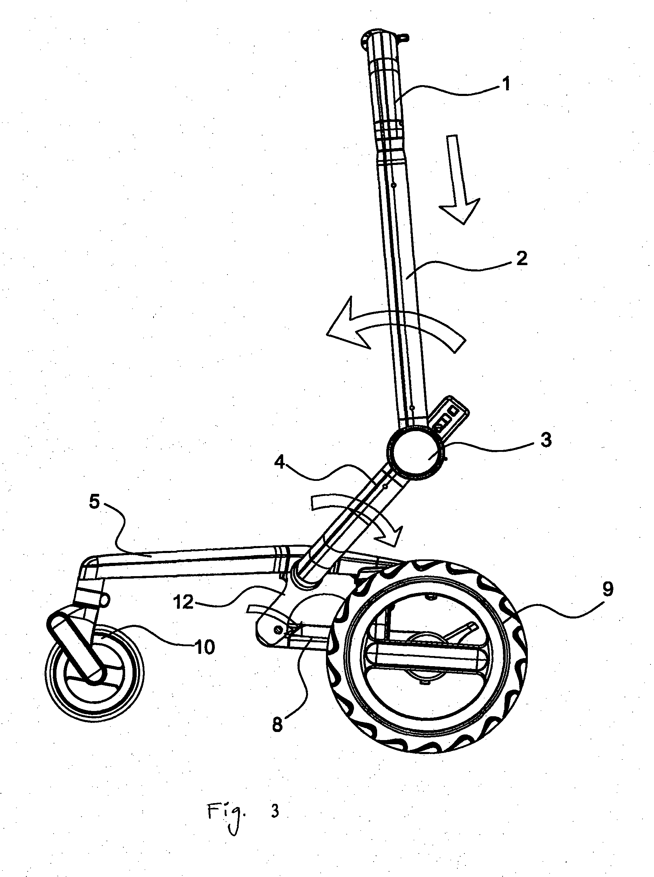

Figure 1 is a schematic view of the foldable stroller of a preferred embodiment according to the present invention. Figure 2 is a side view of the foldable stroller of a preferred embodiment according to the present invention. Figure 3 is a side view of an embodiment of the foldable stroller of a preferred embodiment according to the invention in, showing the process of folding the stroller.

### DETAILED DESCRIPTION OF THE PREFERRED EMBODIMENTS

Referring to the embodiment shown in Figure 1 and 2, a foldable stroller is schematically illustrated, which comprises a front fork 5 and front wheels 10 connected to the front end of the front fork 5, a rear fork 8 and rear wheels 9 connected to the rear end of the rear fork 8, a telescopic link 7 disposed between the front fork 5 and the rear fork 8, a U-shaped swing rod 4 with the blind end rotatably connected to the front fork 5, a second rotation connector 12 with one end fixed to the blind end of the U-shaped swing rod 4 and the other rotatably connected to the rear fork 8, whereby, the profile projection of the front fork 5, the rear fork 8, the second rotation connector 12 and the telescopic link 7 constitute a quadrangular support structure, wherein, the second rotation connector 12 is fixed to the blind end of the U-shaped swing rod 4 by welding, and the front wheels 10 is fitted universally to carry out the steering of the stroller.

The open end of the U-shaped swing rod 4 is rotatably mounted with a lower push rod 2, the end of which is provided with a hollow cavity that a n-shaped upper push rod for holding to push the stroller is plugged into. A number of displacement limitators for limiting the relative position between the upper push rod 1 and the lower push rod 2 are arranged at the junction thereof. In this embodiment, a locking means can be arranged to identify the positioning of the upper push rod 1 to each limitator during the displacement.

The foldable stroller further comprises a first locking part 6 for locking or unlocking the telescopic link 7, and a second locking part 11 for locking or unlocking the first locking part 6. The second locking part 11 is disposed on the U-shaped swing rod 4, and the first locking part 6 is disposed on the telescopic link 7 forming a pedal easily controlled under the stepping of users. The first rotation connector 3 can be divided into two parts, one of which is fixed to the U-shaped swing rod 4 through fastening screws and could be adjusted to fit the position on the U-shaped swing rod 4, the other is fixed to the lower end of the lower push rod 2, wherein, an axis is arranged between the two parts to make the rotary connection between the lower push rod 2 and the U-shaped swing rod 4. When the lower push rod 2 rotates in the direction of the front fork 5 to a predefined angle--for example the angle between the lower push rod 2 and the U-shaped swing rod 4 is at 0 degree, the second locking part 11 is triggered off to actuate unlocking the first locking part 6. It is to be understood for those skilled in the art that the configuration of the above-mentioned predefined angle could be achieved through different technical schemes. In this embodiment, the telescopic link 7 can be an air spring, with one end rotatably connected to the rear fork 8, the other end in contact with the end of the front fork 5.

The folding of the stroller will become apparent to those skilled in the art from the following detailed description of the preferred embodiment, when read in light of the accompanying figure 3.

First, pushing the upper push rod 1 to the bottom in the direction of plugging the lower push rod 2, and rotating the lower push rod 2 around the first rotation connector 3 in the direction of the front wheels. During the rotation of the lower push rod 2 passing the U-shaped swing rod 4, the second locking part 11 is actuated to unlock the first locking part 6.

Then, treading the first locking part 6 to rotate the U-shaped swing rod 4 around the axis between the U-shaped swing rod 4 and the front fork 5 in the direction of the rear wheels 9, during which the second rotation connector 12 fixed to the U-shaped swing rod 4 rotates around the axis between the second rotation connector 12 and the rear fork 8 in the direction of the rear wheels 9 synchronously, inducing the folding of the quadrangular support structure constituted of the front fork 5, rear fork 8, the second rotation connector 12 and the telescopic link 7. The unfolding of the stroller of this embodiment is similar to the above-described process which is not intended to describe herein-below.

It is to be noted that, from the above, there exist 5 folding rotary axes in this example: the rotary axis between the lower push rod 2 and the U-shaped swing rod 4, the rotary axis between the U-shaped swing rod 4 and the front fork 5, the rotary axis between the second rotation connector 12 and the rear fork 8, the rotary axis between the second rotation connector 12 and the front fork 5, and the rotary axis between the telescopic link 7 and the rear fork 8, through which the stroller proceed the transformation of folding and unfolding.

The above description is meant to be exemplary only and is not limited to the example shown in the drawings and described hereinbefore, and those skilled in the art will recognize that changes may be made to the embodiment described without department from the scope of the invention as disclosed in the appended claims.

## Claims

1. A foldable stroller, comprising a front fork (5), front wheels (10) connected to said front fork (5) at its front end, a rear fork (8), rear wheels (9) connected to said rear fork (8) at its rear end, a telescopic link (7) disposed between the front fork (5) and the rear fork (8), a U-shaped swing rod (4) with the blind end rotatably connected to the front fork (5), a second rotation connector (12) with one end fixed to the blind end of the U-shaped swing rod (4) and the other end rotatably connected to the rear fork (8), a push rod rotatably connected to the open end of the U-shaped swing rod (4), a first locking part (6) for locking or unlocking said telescopic link (7), and a second locking part (11) for locking or unlocking said first locking part (6), wherein the profile projection of the front fork (5), the rear fork (8), the second rotation connector (12) and the telescopic link (7) constitutes a quadrangular support structure

2. The foldable stroller as claimed in claim 1, wherein, the push rod comprises a lower push rod (2) connected to the U-shaped swing rod (4) and provided with at least a hollow cavity that an upper push rod (1) is plugged into.

3. The foldable stroller as claimed in claim 2, wherein, a number of displacement limitators for limiting the relative position between the upper push rod (1) and the lower push rod (2) are arranged at the junction thereof.

4. The foldable stroller as claimed in claim 1, wherein, the second locking part (11) is disposed on the U-shaped swing rod (4), whereby, the second locking part (11) is triggered off to actuate unlocking the first locking part (6) when the lower push rod (2) rotates in the direction of the front fork (5).

5. The foldable stroller as claimed in any one of the preceding claims, wherein, the telescopic link (7) comprises an air spring.

## Patentansprüche

1. Zusammenklappbarer Kinderwagen, umfassend eine vordere Gabel (5), Vorderräder (10), die an deren vorderem Ende mit der vorderen Gabel (5) verbunden sind, eine hintere Gabel (8), Hinterräder (9), die an deren hinterem Ende mit der hinteren Gabel (8) verbunden sind, eine Teleskopverbindung (7) zwischen der vorderen Gabel (5) und der hinteren Gabel (8), eine U-förmige Schwingstange (4), deren blindes Ende drehbar mit der vorderen Gabel (5) verbunden ist, einen zweiten Drehverbinder (12), dessen eines Ende mit dem blinden Ende der U-förmigen Schwenkstange (4) verbunden ist und dessen anderes Ende drehbar mit der hinteren Gabel (8) verbunden ist, eine Schubstange, die drehbar mit dem offenen Ende der U-förmigen Schwenkstange (4) verbunden ist, ein erstes Verriegelungsteil (6) zur Verriegelung oder Entriegelung der Teleskopverbindung (7) und ein zweites Verriegelungsteil (11) zur Verriegelung oder Entriegelung des ersten Verriegelungsteils (6), wobei die Profilprojektion der vorderen Gabel (5), der hinteren Gabel (8), des zweiten Drehverbinders (12) und der Teleskopverbindung (7) eine viereckige Trägerstruktur bildet.

2. Zusammenklappbarer Kinderwagen gemäß Anspruch 1, wobei die Schubstange eine untere Schubstange (2) umfasst, die mit der U-förmigen Schwenkstange (4) verbunden ist und mindestens einen Hohlraum aufweist, in den eine obere Schubstange (1) gesteckt ist.

3. Zusammenklappbarer Kinderwagen gemäß Anspruch 2, wobei mehrere Verschiebungsbegrenzer zur Begrenzung der relativen Position zwischen der oberen Schubstange (1) und der unteren Schubstange (2) an der Verbindungsstelle angeordnet sind.

4. Zusammenklappbarer Kinderwagen gemäß Anspruch 1, wobei das zweite Verriegelungsteil (11) an der U-förmigen Schwenkstange (4) angebracht ist, wobei das zweite Verriegelungsteil (11) ausgelöst wird zur Entriegelung des ersten Verriegelungsteils (6), wenn die untere Schubstange (2) sich in Richtung der vorderen Gabel (5) dreht.

5. Zusammenklappbarer Kinderwagen gemäß einem der vorhergehenden Ansprüche, wobei die Teleskopverbindung (7) eine Luftfeder aufweist.

## Revendications

1. Poussette pliante, comprenant une fourche avant (5), des roues avant (10) reliées à ladite fourche avant (5) au niveau de son extrémité avant, une fourche arrière (8), des roues arrière (9) reliées à ladite fourche arrière (8) au niveau de son extrémité arrière, un embiellage télescopique (7) disposé entre la fourche avant (5) et la fourche arrière (8), une barre oscillante en forme de U (4) dont l'extrémité borgne est reliée en rotation à la fourche avant (5), un second connecteur de rotation (12) dont une extrémité est fixée à l'extrémité borgne de la barre oscillante en forme de U (4) et l'autre extrémité est reliée en rotation à la fourche arrière (8), une tige de poussée reliée en rotation à l'extrémité ouverte de la barre oscillante en forme de U (4), une première partie de verrouillage (6) pour verrouiller ou déverrouiller ledit embiellage télescopique (7), et une seconde partie de verrouillage (11) pour verrouiller ou déverrouiller ladite première partie de verrouillage (6), la saillie profilée de la fourche avant (5), la fourche arrière (8), le second connecteur de rotation (12) et l'embiellage télescopique (7) constituant une structure de support quadrangulaire.

2. Poussette pliante selon la revendication 1, dans laquelle la tige de poussée comprend une tige de poussée inférieure (2) reliée à la barre oscillante en forme de U (4) et dotée d'au moins une cavité creuse dans laquelle est fichée une tige de poussée supérieure (1).

3. Poussette pliante selon la revendication 2, dans laquelle un nombre d'éléments de limitation de déplacement destinés à limiter la position relative entre la tige de poussée supérieure (1) et la tige de poussée inférieure (2) sont agencés à la jonction des deux tiges.

4. Poussette pliante selon la revendication 1, dans laquelle la seconde partie de verrouillage (11) est disposée sur la barre oscillante en forme de U (4), grâce à quoi la seconde partie de verrouillage (11) est déclenchée pour actionner le déverrouillage de la première partie de verrouillage (6) lorsque la tige de poussée inférieure (2) tourne dans la direction de la fourche avant (5).

5. Poussette pliante selon l'une quelconque des revendications précédentes, dans laquelle l'embiellage télescopique (7) comprend un ressort pneumatique.
